# EUROPEAN PATENT SPECIFICATION

(11) **EP 4 417 354 B1**
(45) Date of publication and mention of the grant of the patent: **10.09.2025**
(21) Application number: 22907045.3
(22) Date of filing: 28.10.2022
(51) Int. Cl.: B23K 9/28, B23K 9/32

(54) **ROTATING REPLACEMENT DEVICE**
ROTIERENDE AUSTAUSCHVORRICHTUNG
DISPOSITIF DE REMPLACEMENT ROTATIF

(30) Priority: 14.12.2021 JP 2021202246
(43) Date of publication of application: 21.08.2024
(73) Proprietor: TIPMAN CO., LTD., Miyoshi-shi, Aichi 4700206 (JP)
(72) Inventor: HUYNH, Huu Thinh, Miyoshi-shi, Aichi 4700206 (JP)
(74) Representative: Winter, Brandl - Partnerschaft mbB
(86) International application number: PCT/JP2022/040283
(87) International publication number: WO 2023/112511

(56) References cited:
- WO-A1-2017/179237
- CN-U- 211 804 735
- CN-U- 211 804 735
- JP-A- 2012 130 928
- JP-A- 2013 013 929
- JP-A- H06 254 680
- JP-A- H06 312 266
- JP-A- H06 312 266
- JP-A- H11 239 876

## Description

### BACKGROUND OF INVENTION

### Field of the Invention

The present invention relates to a rotary changer for replacing, for example, torch components of a welding torch used for arc welding, such as a nozzle and a contact tip screwed to the distal end of a torch body of the welding torch (see for example, JP H06 312266 A, which forms the basis for the preamble of claim 1).

### Background Art

A rotary changer is commonly used to attach or detach torch components of a welding torch used for arc welding, such as a nozzle and a contact tip, to or from the distal end of the torch body by rotating the torch components in the forward or reverse direction. For example, the rotary changer described in Patent Literature 1 includes multiple rotators that can rotate and hold torch components. The rotators are aligned linearly in the horizontal direction in a rectangular storage holder and oriented to have the axis of rotation in the vertical direction. Each rotator has a spur gear attached to its lower end with the axis of rotation aligned with the axis of rotation of the spur gear. A first drive motor including a first pinion gear with the axis of rotation oriented in the vertical direction and rotatable in the forward or reverse direction is located below the storage holder. The first pinion gear faces inward at the bottom of the storage holder. Whereas a rack is attached lateral to a lower portion of the storage holder in a direction in which the storage holder extends, a second drive motor rotatable in the forward or reverse direction with a second pinion gear meshing with the rack is located in a lower side portion of the storage holder. More specifically, the storage holder is movable horizontally with a rack-and-pinion assembly including the second pinion gear and the rack. The storage holder moves horizontally to move each rotator sequentially to a component replacement area, in which torch components of the welding torch are replaced and the first pinion gear meshes with the spur gear of the rotator that has moved to the component replacement area. This allows sequential switching of the rotators in the component replacement area for replacing torch components, as well as a forward rotation or a reverse rotation of the rotator located in the component replacement area and connected with the first drive motor.

### CITATION LIST

### PATENT LITERATURE

Patent Literature 1: Japanese Unexamined Patent Application Publication No. 2002-192345

### SUMMARY OF INVENTION

### TECHNICAL PROBLEM

The structure described in Patent Literature 1 includes the rotators each with the spur gear meshing with the first pinion gear of the first drive motor while moving in a direction perpendicular to the axis of rotation. Thus, any repeated switching operation of each rotator in the component replacement area can cause a large load to be applied to the teeth of the spur gear and the first pinion gear in the tooth thickness direction upon every meshing between the spur gear and the first pinion gear. This may deform or damage the spur gear and the first pinion gear.

In Patent Literature 1, different drive motors are used to rotate the rotators and to move the storage holder. This structure increases the number of components and increases the cost, and increases the size of the equipment with such two drive motors using much space.

Under such circumstances, one or more aspects of the present invention are directed to a rotary changer, used for replacing torch components of a welding torch, that is compact and low-cost as well as less likely to break after repeated use.

### SOLUTION TO PROBLEM

In response to the above, the structure according to one or more aspects of the present invention includes a clutch assembly that allows a single drive motor to cause rotation for attaching or detaching torch components to or from a torch body of a welding torch and rotation of a rotary storage for supplying torch components for replacement.

More specifically, a rotary changer for attaching a plurality of torch components each to a torch body of a welding torch in a forward rotation or detaching each of the plurality of torch components from the torch body in a reverse rotation has the structure described below.

The rotary changer according to a first aspect includes a rotary grip that grips each of the plurality of torch components in a component replacement area in the forward rotation or in the reverse rotation about a central axis of the torch component, a rotary storage that stores the plurality of torch components at predetermined intervals in a circumferential direction about an axis of rotation and moves each of the plurality of torch components sequentially to a component supply area by rotating about the axis of rotation, a component transporter that transports each of the plurality of torch components from the component supply area to the component replacement area, a drive motor that drives the rotary grip in the forward rotation or in the reverse rotation, and a clutch assembly that transmits rotation and blocks transmission of rotation between the rotary storage and the drive motor.

A rotary changer according to a second aspect is the rotary changer according to the first aspect in which the rotary storage is annular about the axis of rotation, and the drive motor and the clutch assembly are located inward from the rotary storage.

A rotary changer according to a third aspect is the rotary changer according to the second aspect in which the rotary storage is orientable to have the axis of rotation extending vertically, and the rotary storage includes a support plate that supports the plurality of torch components and includes a plurality of annular plates located above the support plate and aligned along the axis of rotation. Each of the plurality of annular plates has a plurality of through-holes corresponding to outer shapes of the plurality of torch components at predetermined intervals in the circumferential direction about the axis of rotation. The plurality of through-holes in each of the plurality of annular plates are at positions corresponding vertically to the plurality of through-holes in an adjacent annular plate of the plurality of annular plates.

A rotary changer according to a fourth aspect is the rotary changer according to the third aspect in which each of the plurality of annular plates has a cutout being open on an outer side to allow each of the plurality of torch components to pass through. The cutout is at a position corresponding vertically to the cutout in the adjacent annular plate and is movable to the component supply area by rotation of the rotary storage.

A rotary changer according to a fifth aspect is the rotary changer according to any one of the first to fourth aspects in which the component transporter includes a first cylinder including a first rod extendable and retractable between the component supply area and the component replacement area. The first rod extends to press and move each of the plurality of torch components from the component supply area to the component replacement area.

A rotary changer according to a sixth aspect is the rotary changer according to any one of the first to fifth aspects in which a first gear is attached to the drive motor in an integrally rotatable manner. The clutch assembly includes a second gear that rotates the rotary storage, a slide shaft attached to the second gear in an integrally rotatable manner and slidable along a centerline of the second gear, a third gear meshing with the first gear, an urging member urging the slide shaft in a first direction, and a second cylinder including a second rod extendable to slide the slide shaft in a second direction against an urging force from the urging member. The slide shaft includes an engagement tab. The third gear includes a receiving tab engageable with the engagement tab when the slide shaft slides in the second direction.

### ADVANTAGEOUS EFFECTS

In the first aspect, the torch component screwed to the torch body of the rotary grip in the component replacement area for the rotary grip is gripped by the rotary grip, and the drive motor is driven to allow the reverse rotation of the rotary grip. The torch component is thus detached from the torch body. In contrast, when the drive motor is driven with the clutch assembly operable to transmit rotation between the rotary storage and the drive motor, the rotary storage rotates to allow a torch component for replacement to move to the component supply area. In this state, the component transporter transports the torch component from the component supply area to the component replacement area. With the torch body moved closer to the component replacement area, the torch component is gripped by the rotary grip and the drive motor is driven to allow the forward rotation of the rotary grip. The torch component is thus attached to the torch body. Thus, the single drive motor simply used to replace the torch components uses less space and thus allows the entire equipment to be more compact. In addition, the number of components can be reduced as compared with the structure described in Patent Literature 1, thus maintaining the cost of components to be low. The clutch assembly is used to connect the drive motor and the rotary grip to avoid a large load to be applied when the drive motor and the rotary grip are connected, and thus to avoid deformation and damage to the rotary grip and drive motor for replacing torch components.

In the second aspect, the clutch assembly and the drive motor are located in an unused space, thus allowing the entire device to be more compact.

In the third aspect, when the torch components are sequentially placed in the corresponding through-holes in the annular plates adjacent to one another from above, the torch components are supported by the support plate and are positioned in the circumferential direction of the rotary storage with the corresponding through-holes. In this manner, the rotary storage with the simple structure can store the torch components at predetermined positions, thus further reducing the device cost.

In the fourth aspect, when the cutouts are moved to the component supply area and the torch component detached from the torch body is released from being gripped by the rotary grip, the torch component falling from the rotary grip passes through the cutouts and is discharged out of the equipment. Thus, the torch component detached from the torch body after being used can be efficiently discharged out of the device without being retained in the rotary storage.

In the fifth aspect, when the first rod in the first cylinder is extended with the torch component for replacement being moved to the component supply area by the rotation of the rotary storage, the first rod presses the torch component toward the component replacement area and causes the torch component to reach the component replacement area from the component supply area. In this manner, the simple structure allows each torch component stored in the rotary storage to be sequentially transported to the component replacement area.

In the sixth aspect, when the second rod in the second cylinder is retracted, the slide shaft remains sliding in the first direction under the urging force from the urging member, and the engagement tabs are separated from the receiving tabs, thus causing the drive motor to rotate the rotary grip alone in the forward or reverse direction. Thus, the torch components stored in the rotary storage each can be positioned in the component supply area and attached to the torch body. In contrast, when the second rod in the second cylinder is extended against the urging force from the urging member, the engagement tabs engage with the corresponding receiving tabs, thus causing the drive motor to rotate the rotary grip as well as the rotary storage in the forward or reverse direction. The torch components stored in the rotary storage are thus each moved to the component supply area. In this manner, the clutch assembly with the simple structure allows switching of the rotary storage between the rotatable state and the non-rotatable state.

### BRIEF DESCRIPTION OF THE DRAWINGS

FIG. 1 is a perspective view of a rotary changer according to an embodiment of the present invention.
FIG. 2 is a sectional view taken along line II-II in FIG. 1.
FIG. 3 is a sectional view taken along line III-III in FIG. 2.
FIG. 4 is an exploded partial perspective view of a clutch assembly.
FIG. 5 is a sectional view taken along line V-V in FIG. 2.
FIG. 6 is a view of a nozzle corresponding to FIG. 2 immediately before being detached from a torch body.
FIG. 7 is a sectional view taken along line VII-VII in FIG. 6.
FIG. 8 is a view of the nozzle being detached from the torch body after the state in FIG. 7.
FIG. 9 is a view of the nozzle immediately after being detached from the torch body after the state shown in FIG. 8.
FIG. 10 is a view of a nozzle before replacement being set in a component supply area after the state in FIG. 9.
FIG. 11 is a view of the nozzle before replacement being transported from the component supply area to a component replacement area and immediately before being attached to the torch body after the state in FIG. 10.
FIG. 12 is a sectional view taken along line XI-XI in FIG. 11.
FIG. 13 is a view of the nozzle being attached to the torch body after the state in FIG. 12.
FIG. 14 is a view of the nozzle immediately after being attached to the torch body after the state in FIG. 13.

### DETAILED DESCRIPTION

One or more embodiments of the present invention will now be described in detail with reference to the drawings. The embodiments described below are mere examples.

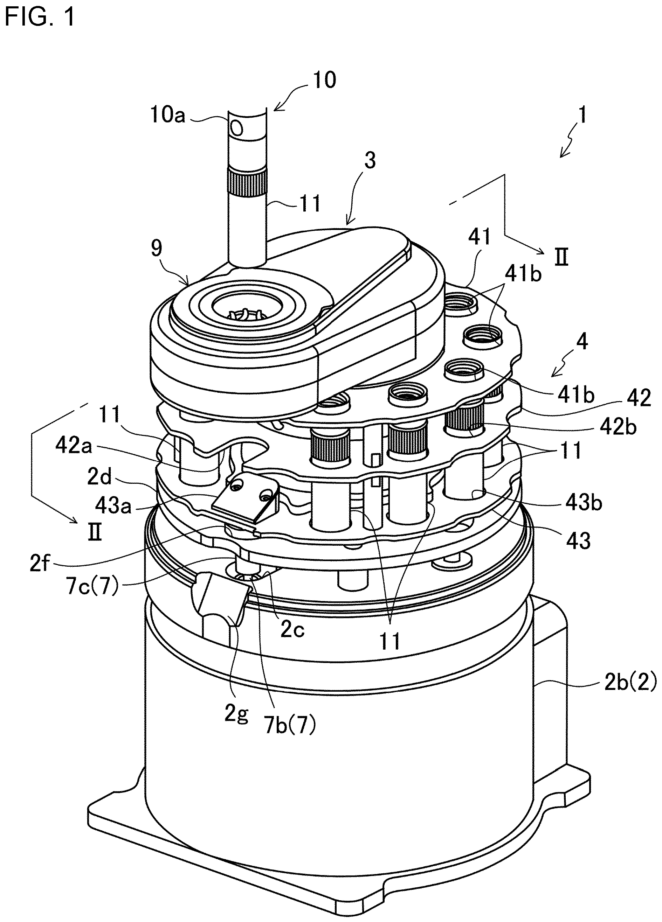

FIG. 1 shows a rotary changer 1 according to an embodiment of the present invention. The rotary changer 1 is used to replace, with a new nozzle, a used nozzle 11 (torch component) that is cylindrical and attached to a welding torch 10 for arc welding.

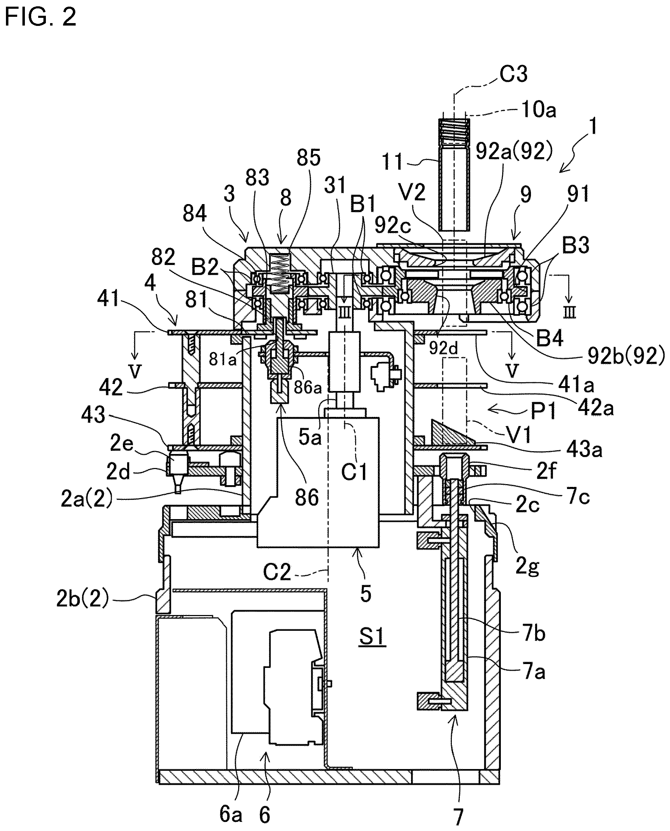

As shown in FIG. 2, the welding torch 10 includes a torch body 10a that is substantially cylindrical. The torch body 10a receives, at its distal end, the nozzle 11 screwed in a detachable manner. A contact tip (not shown) is also screwed to the distal end of the torch body 10a, but is not shown for convenience.

The rotary changer 1 includes a main case 2, a nozzle gripper 3, and a rotary storage 4. The main case 2 has a substantially box shape with a protrusion at the upper middle in a side view and defines an internal accommodation space S1. The nozzle gripper 3 is a substantially rectangular plate extending from the upper end of the main case 2 in a first horizontal direction. The rotary storage 4 has an annular shape in a plan view and is located outside the upper half of the main case 2.

The main case 2 includes an upper case 2a that is cylindrical and has the cylinder centerline extending vertically, and a lower case 2b extending continuously below the upper case 2a and substantially disc-shaped having a thickness in the vertical direction. The lower case 2b has its outer side surface located outward from the outer side surface of the upper case 2a.

The lower case 2b has, in its upper surface corresponding to an area of the nozzle gripper 3 in the first horizontal direction, a connecting hole 2c connecting with the inside of the lower case 2b. A component supply area V1 and a component replacement area V2 are defined directly above the connecting hole 2c in order from below.

The lower case 2b has, at a position adjacent to the connecting hole 2c on an outer peripheral edge of its upper surface, a slope 2g gradually sloping downward toward the outer side.

An attachment bracket 2d is located on the outer side of the upper case 2a at a position adjacent to the lower case 2b. The attachment bracket 2d is a plate extending annularly around the upper case 2a.

The attachment bracket 2d has an opening 2f at a position corresponding to the connecting hole 2c, and a position detection sensor 2e attached opposite to the opening 2f in the attachment bracket 2d.

The upper case 2a contains a drive motor 5 that can rotate in the forward or reverse direction under servo control. The drive motor 5 is oriented to have an axis of rotation C1 extending vertically and has a drive shaft 5a protruding upward through an opening in the upper end of the upper case 2a.

The lower case 2b contains a controller 6 including a control board 6a and a component transporter 7 that can transport the nozzles 11. The component transporter 7 is at a position corresponding to the connecting hole 2c.

The component transporter 7 includes an elongated pneumatic first cylinder 7a with the cylinder centerline extending vertically. The first cylinder 7a includes a first rod 7b extendable and retractable between the component supply area V1 and the component replacement area V2.

The first rod 7b has, at its upper end, a cylindrical pressure member 7c located in the opening 2f.

The rotary storage 4 is annular and has an axis of rotation C2 extending vertically and is axially supported in a rotatable manner by the upper case 2a.

The rotary storage 4 includes a first annular plate 41, a second annular plate 42, and a support plate 43 arranged in order from above at predetermined intervals along the axis of rotation C2. The plates are annular in a plan view and each have an outer peripheral edge extending in a wavy manner in a plan view.

The first annular plate 41 has one first cutout 41a, which is rectangular in a plan view and open on the outer side, and multiple first through-holes 41b corresponding to the outer shapes of the nozzles 11, through which the nozzles 11 can pass.

The first cutout 41a and the first through-holes 41b are at equal intervals in the circumferential direction about the axis of rotation C2.

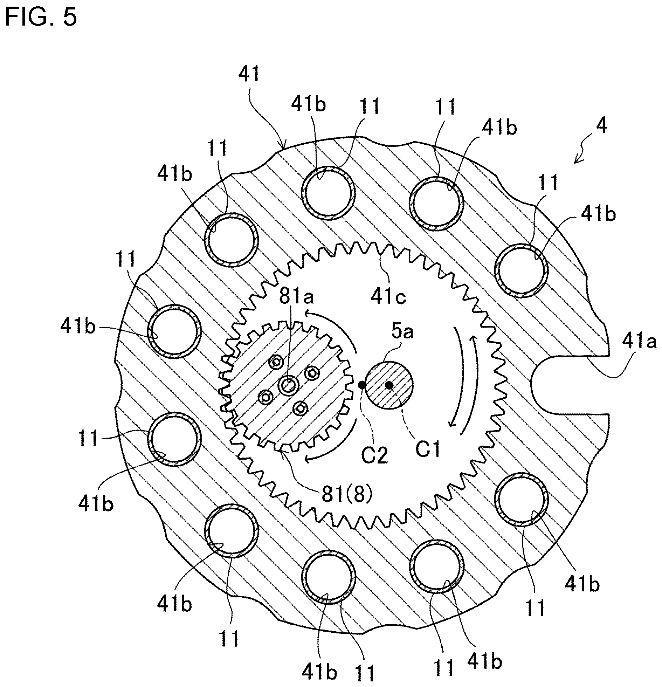

As shown in FIG. 5, the first annular plate 41 includes many internal teeth 41c aligned on its inner peripheral edge.

As shown in FIGs. 1 and 2, the second annular plate 42 has one second cutout 42a, which is rectangular in a plan view and open on the outer side, and multiple second through-holes 42b corresponding to the outer shapes of the nozzles 11. The second cutout 42a and the second through-holes 42b are at equal intervals in the circumferential direction about the axis of rotation C2. The second cutout 42a is at a position corresponding to the first cutout 41a in the adjacent first annular plate 41, and the second through-holes 42b are at positions corresponding vertically to the first through-holes 41b in the adjacent first annular plate 41.

A guide member 43a is attached to the upper surface of the support plate 43 at a position corresponding to the second cutout 42a. The guide member 43a has an upper surface gradually sloping downward toward the outer side.

The support plate 43 has multiple support holes 43b at positions corresponding to the second through-holes 42b in the second annular plate 42. The support holes 43b are through-holes extending vertically, through which the pressure member 7c in the component transporter 7 can be placed.

The support holes 43b each have an opening rim with a shape corresponding to the periphery of the distal end of the nozzle 11 with an opening. When the nozzle 11 is placed in the corresponding first through-hole 41b in the first annular plate 41 and the corresponding second through-hole 42b in the second annular plate 42 sequentially from above, the periphery of the distal end of the nozzle 11 comes in contact with the opening rim of the support hole 43b and the nozzle 11 is supported from below by the support plate 43. The nozzle 11 is thus positioned in the circumferential direction of the rotary storage 4 with the first through-hole 41b and the second through-hole 42b in which the nozzle 11 is placed.

More specifically, the rotary storage 4 can store multiple nozzles 11 at predetermined intervals in the circumferential direction about the axis of rotation C2. Each nozzle 11 is thus sequentially movable to the component supply area V1 by a forward or reverse rotation of the rotary storage 4 about the axis of rotation C2. The rotary storage 4 can move the first cutout 41a and the second cutout 42a to the component supply area V1 by its forward or reverse rotation about the axis of rotation C2.

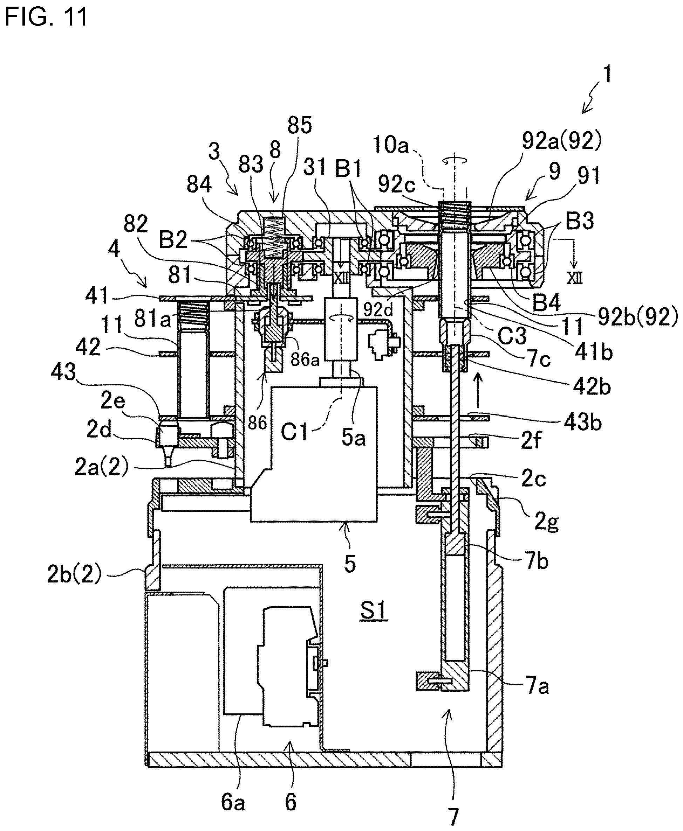

As shown in FIG. 11, when the first rod 7b in the first cylinder 7a in the component transporter 7 is extended with a nozzle 11 for replacement being moved to the component supply area V1, the pressure member 7c presses the nozzle 11 toward the component replacement area V2 sequentially through the support hole 43b and the second through-hole 42b. The nozzle 11 then reaches the component replacement area V2 from the component supply area V1. Thus, the component transporter 7 can sequentially transport each nozzle 11 stored in the rotary storage 4 to the component replacement area V2 with a simple structure.

As shown in FIG. 2, a first gear 31 is located in the middle portion of the nozzle gripper 3 closer to a second end of the nozzle gripper 3. The first gear 31 is a spur gear axially supported on a frame of the nozzle gripper 3 with a bearing B1 and is attached to the drive shaft 5a of the drive motor 5 in an integrally rotatable manner.

A clutch assembly 8 is located at the second end of the nozzle gripper 3 to face the inside of the upper case 2a. The clutch assembly 8 transmits rotation and blocks transmission of rotation between the rotary storage 4 and the drive motor 5. More specifically, the drive motor 5 and the clutch assembly 8 are located inward from the rotary storage 4.

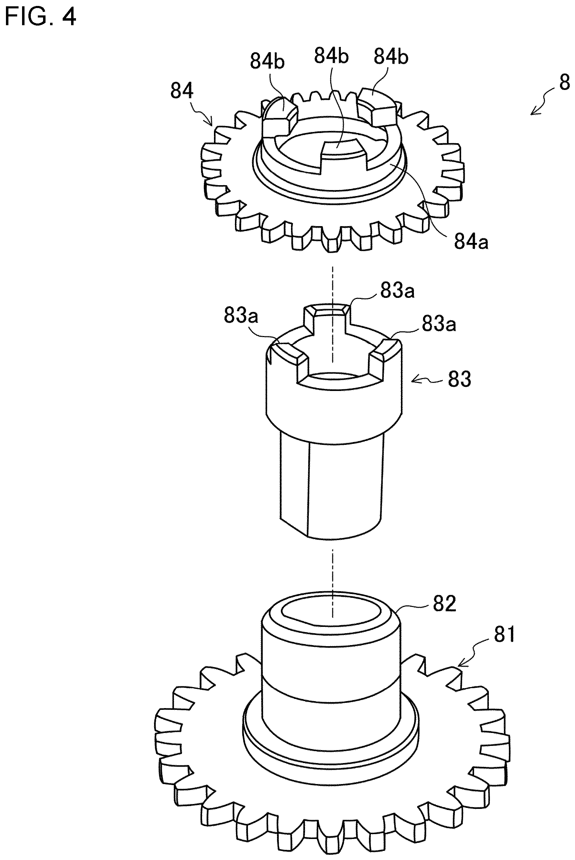

As shown in FIGs. 2 and 4, the clutch assembly 8 includes a second gear 81 with the centerline extending vertically and having a center hole 81a at the center. The second gear 81 is a spur gear that meshes with the internal teeth 41c on the first annular plate 41.

A cylindrical guide 82 is attached to the upper surface of the second gear 81 with the cylinder centerline extending vertically to surround the center hole 81a.

A slide shaft 83 attached to the second gear 81 in an integrally rotatable manner can slide up and down inside the cylindrical guide 82.

Three engagement tabs 83a protrude upward from the outer peripheral edge of the upper end of the slide shaft 83 at equal intervals in the circumferential direction of the slide shaft 83.

A third gear 84, which is a spur gear, is axially supported on the frame at the second end of the nozzle gripper 3 with the bearing B2. The third gear 84 includes, in its center, a cylindrical shaft 84a extending vertically along the axis of rotation of the third gear 84.

The slide shaft 83 is fitted into the cylindrical shaft 84a in a slidable and rotatable manner.

Three receiving tabs 84b protrude inward from the edge of the upper end of the cylindrical shaft 84a at equal intervals in the circumferential direction of the cylindrical shaft 84a. When the slide shaft 83 slides upward (in a second direction), the engagement tabs 83a are fitted into and engage with the corresponding receiving tabs 84b. The third gear 84 and the slide shaft 83 thus rotate integrally.

As shown in FIG. 2, a coil spring 85 (urging member) urging the slide shaft 83 is located above the slide shaft 83 to slide the slide shaft 83 downward (in a first direction).

A second cylinder 86 including a second rod 86a is located below the second gear 81. The second rod 86a is extendable and retractable vertically.

The second rod 86a in the second cylinder 86 is located inside the center hole 81a and the cylindrical guide 82. The second rod 86a is extendable to cause the slide shaft 83 to slide upward against an urging force from the coil spring 85.

When the slide shaft 83 is at a lower position under the urging force from the coil spring 85, the engagement tabs 83a and the receiving tabs 84b are out of engagement with one another. When the drive motor 5 is driven to rotate in the forward or reverse direction in this state, the third gear 84 rotates relative to the slide shaft 83, and the second gear 81 does not rotate and maintains the rotary storage 4 without rotation.

In contrast, when the slide shaft 83 slides upward, the engagement tabs 83a and the receiving tabs 84b engage with one another. When the drive motor 5 is driven to rotate in the forward or reverse direction in this state, the first gear 31, the third gear 84, and the second gear 81 rotate sequentially, and the first annular plate 41 meshing with the second gear 81 causes the rotary storage 4 to rotate in the forward or reverse direction.

As shown in FIG. 2, a rotary grip 9 is located in the component replacement area V2 at a first end of the nozzle gripper 3.

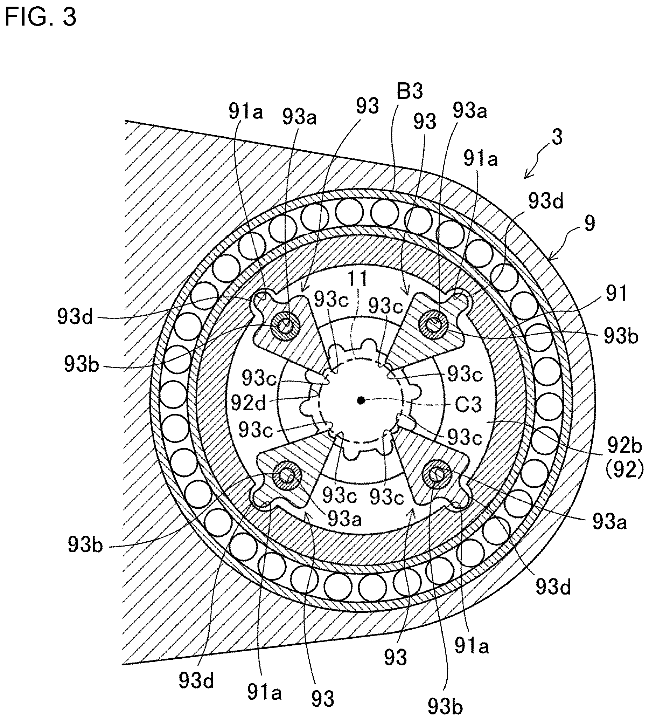

As shown in FIGs. 2 and 3, the rotary grip 9 includes a follower gear 91 and a rotary disk 92 with an axis of rotation C3 extending in the vertical direction on the center of the component replacement area V2. The follower gear 91 is axially supported on the frame of the nozzle gripper 3 with a bearing B3.

The follower gear 91 and the rotary disk 92 rotate relative to each other about the axis of rotation C3 with a bearing B4.

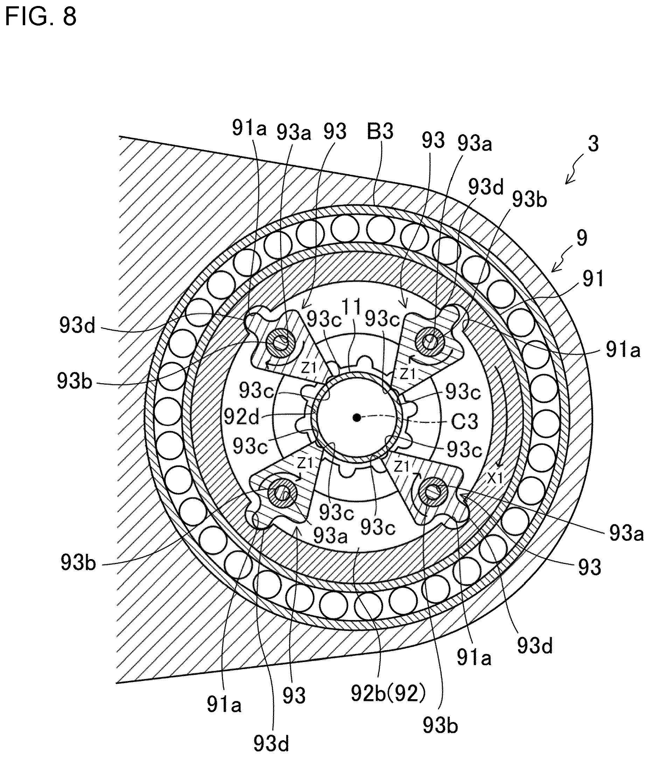

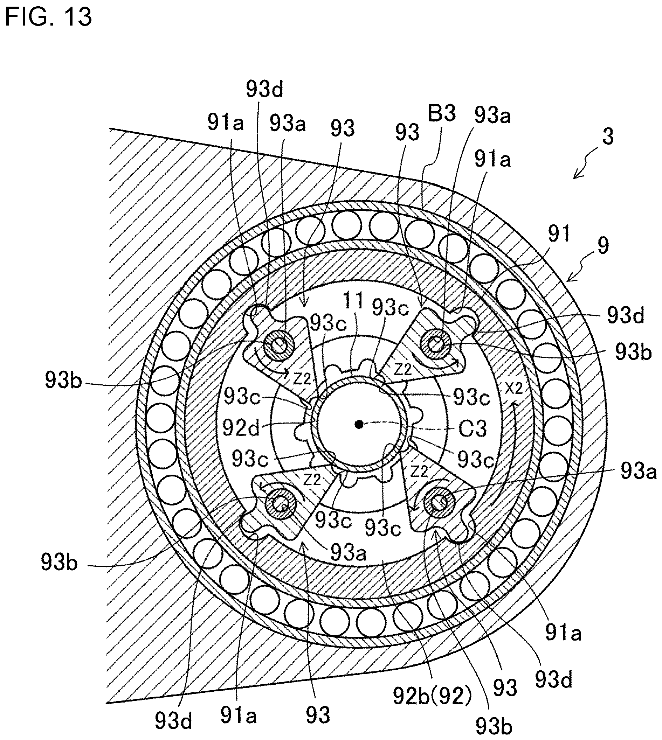

As shown in FIG. 8, the follower gear 91 rotates in the reverse direction (X1 direction) through the first gear 31 when the drive motor 5 rotates in the forward direction. As shown in FIG. 13, the follower gear 91 rotates in the forward direction (X2 direction) through the first gear 31 when the drive motor 5 rotates in the reverse direction.

As shown in FIGs. 2 and 3, the follower gear 91 has a substantially ring shape, and has, on its inner peripheral surface, four fitting portions 91a being recesses open on the inner side surface of the follower gear 91 at equal intervals in the circumferential direction about the axis of rotation C3.

The rotary disk 92 includes an upper disk 92a above the follower gear 91 and a lower disk 92b inward from the follower gear 91.

The upper disk 92a is substantially circular, and has, in its center, a circular upper nozzle through-hole 92c corresponding to the component replacement area V2.

The lower disk 92b has, in its center, a circular lower nozzle connecting hole 92d corresponding to the component replacement area V2.

A leaf spring (not shown) is located between the upper disk 92a and the follower gear 91 to increase the resistance between the upper disk 92a and the follower gear 91.

Four grips 93 with a substantially arrow shape in a plan view are located inward from the follower gear 91 and between the upper disk 92a and the lower disk 92b. Each grip 93 is at a position corresponding to one of the fitting portions 91a.

Each grip 93 has, substantially in its center, an insertion hole 93a through which a pivot shaft 93b extends in the same direction as the axis of rotation C3.

Each pivot shaft 93b has one end fixed to the upper disk 92a and the other end fixed to the lower disk 92b. Each grip 93 is axially supported by the rotary disk 92 in a pivotable manner about the corresponding pivot shaft 93b.

Each grip 93 includes, at its distal end, a pair of hooks 93c protruding toward the component replacement area V2 and spaced from each other in the circumferential direction about the axis of rotation C3.

Each grip 93 includes, at the middle of its basal end, a base 93d protruding in a direction opposite to the component replacement area V2. The base 93d is loosely fitted into the corresponding fitting portion 91a.

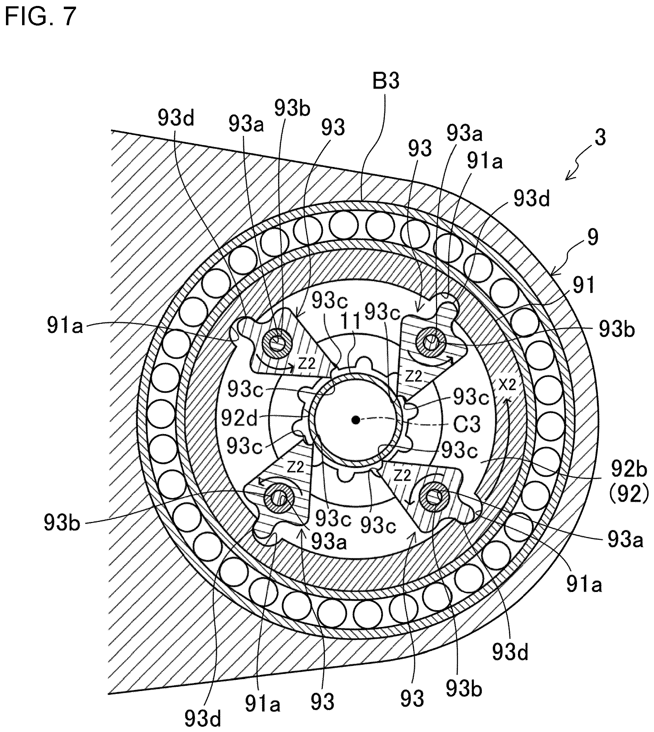

As shown in FIGs. 7 and 8, when the drive motor 5 rotates in the forward direction with the nozzle 11 attached to the torch body 10a located in the component replacement area V2, the follower gear 91 rotates relative to the rotary disk 92 in a first direction (X1 direction). In cooperation with this, the fitting portions 91a press the bases 93d in the first direction to cause the grips 93 to pivot in the first direction (Z1 direction). This causes a first hook 93c of each pair of the hooks 93c to advance into the component replacement area V2 and grip the nozzle 11.

In other words, the rotary grip 9 can grip the nozzle 11 in a reverse rotation about its central axis in the component replacement area V2.

When, with the nozzle 11 gripped by the first hooks 93c on the grips 93, the drive motor 5 rotates further in the forward direction and the torch body 10a is raised, the nozzle 11 is unscrewed from the torch body 10a and is detached.

When the drive motor 5 rotates in the reverse direction after the nozzle 11 is detached from the torch body 10a, the follower gear 91 rotates relative to the rotary disk 92 in a second direction (X2 direction). In cooperation with this, the fitting portions 91a press the bases 93d in the second direction to cause the grips 93 to pivot in the second direction (Z2 direction), causing the first hook 93c to retract from the component replacement area V2 and release the nozzle 11 from the grips 93.

The nozzle 11 released from the grips 93 falls from the component replacement area V2 and is discharged out of the rotary changer 1.

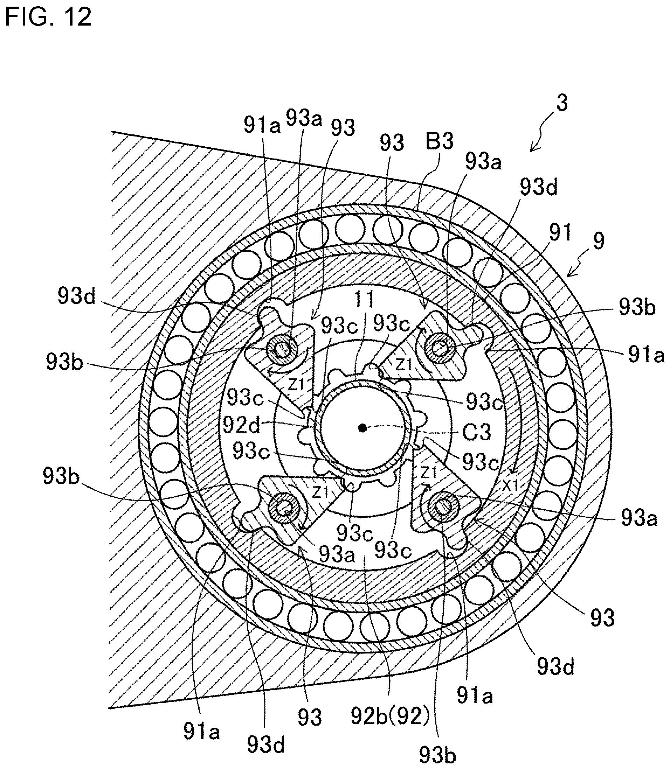

In contrast, as shown in FIGs. 12 and 13, when the drive motor 5 rotates in the reverse direction after the nozzle 11 is pushed upward from the component supply area V1 and placed into the component replacement area V2 by the component transporter 7, the follower gear 91 rotates relative to the rotary disk 92 in the second direction (X2 direction). In cooperation with this, the fitting portions 91a press the bases 93d in the second direction to cause the grips 93 to pivot in the second direction. This causes a second hook 93c of each pair of the hooks 93c to advance into the component replacement area V2 and grip the nozzle 11.

In other words, the rotary grip 9 can grip the nozzle 11 in a forward rotation about its central axis in the component replacement area V2.

When, with the nozzle 11 gripped by the second hooks 93c on the grips 93, the torch body 10a is moved closer to the component replacement area V2 to come in contact with the nozzle 11 and the drive motor 5 rotates further in the reverse direction, the nozzle 11 is screwed to the torch body 10a.

When the drive motor 5 rotates in the forward direction after the nozzle 11 is attached to the torch body 10a with the nozzle 11 gripped by the second hooks 93c on the grips 93, the follower gear 91 rotates relative to the rotary disk 92 in the first direction (X1 direction). In cooperation with this, the fitting portions 91a press the bases 93d in the first direction to cause the grips 93 to pivot in the first direction, causing the second hook 93c to retract from the component replacement area V2 and release the nozzle 11 from the grips 93.

Replacement of the nozzle 11 using the rotary changer 1 will now be described in detail.

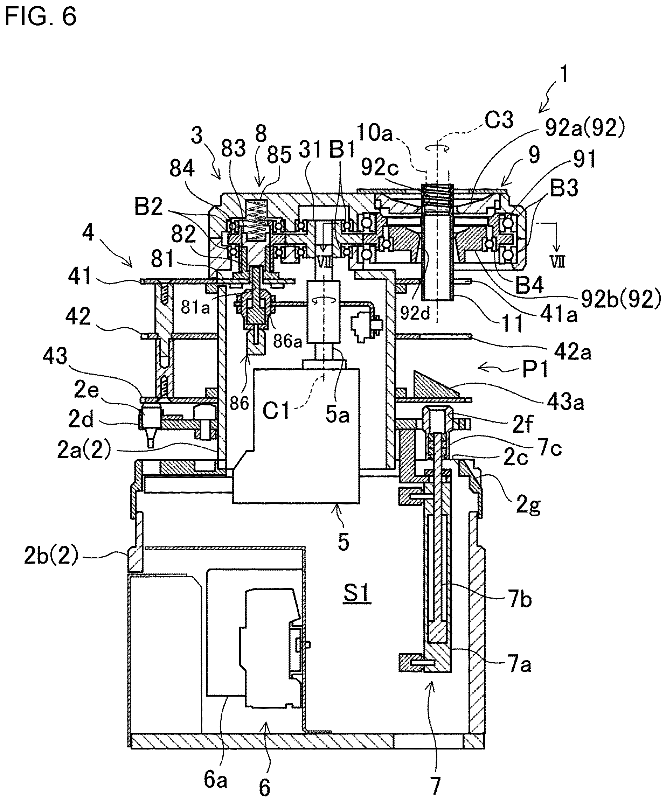

As shown in FIGs. 6 and 7, a used nozzle 11 still attached to the torch body 10a is first moved and placed into the component replacement area V2 for the rotary grip 9 from above. In this state, the rotary storage 4 is at a reference position P1 at which the first cutout 41a and the second cutout 42a are located in the component replacement area V2. The second rod 86a in the second cylinder 86 is retracted, and the engagement tabs 83a on the slide shaft 83 are out of engagement with the receiving tabs 84b on the third gear 84. The follower gear 91 rotates relative to the rotary disk 92 in the second direction (X2 direction).

When the used nozzle 11 attached to the torch body 10a is placed in the component replacement area V2, the drive motor 5 rotates in the forward direction to cause the follower gear 91 to rotate relative to the rotary disk 92 in the first direction (X1 direction). In cooperation with the follower gear 91 rotating relative to the rotary disk 92 in the first direction, as shown in FIG. 8, the fitting portions 91a press the bases 93d in the first direction to cause the grips 93 to pivot in the first direction (Z1 direction). This causes the first hooks 93c to advance into the component replacement area V2 and grip the nozzle 11.

With the nozzle 11 gripped by the grips 93, the drive motor 5 rotates further in the forward direction to cause the nozzle 11 to rotate in the first direction and be detached from the torch body 10a.

The drive motor 5 then rotates in the reverse direction to cause the follower gear 91 to rotate relative to the rotary disk 92 in the second direction. In cooperation with the follower gear 91 rotating relative to the rotary disk 92 in the second direction, the fitting portions 91a press the bases 93d in the second direction to cause the grips 93 to pivot in the second direction. This causes the second hooks 93c to retract from the component replacement area V2. This releases the nozzle 11 from the grips 93, and the nozzle 11 falls from the component replacement area V2.

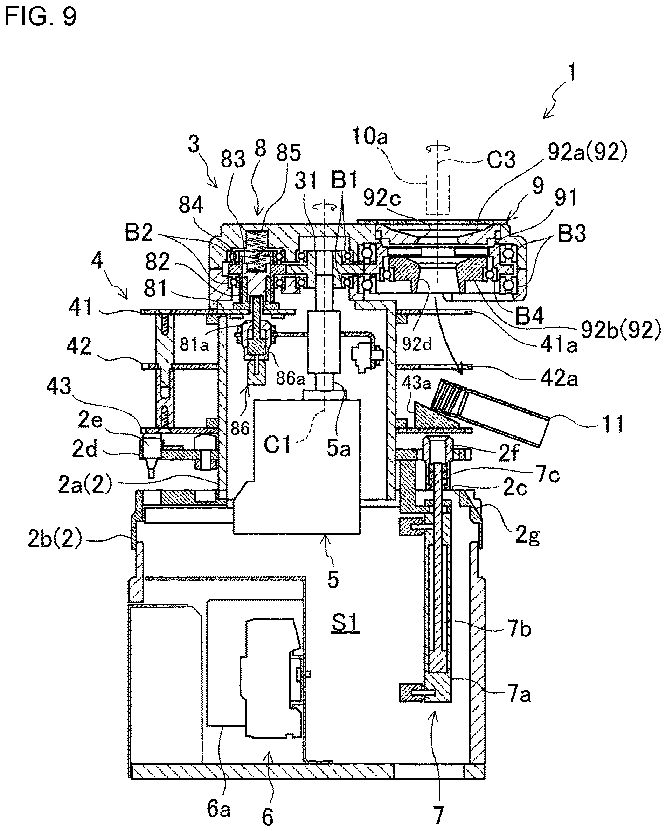

As shown in FIG. 9, after falling through the first cutout 41a and the second cutout 42a, the used nozzles 11 are guided diagonally downward along the guide member 43a and discharged out of the rotary changer 1.

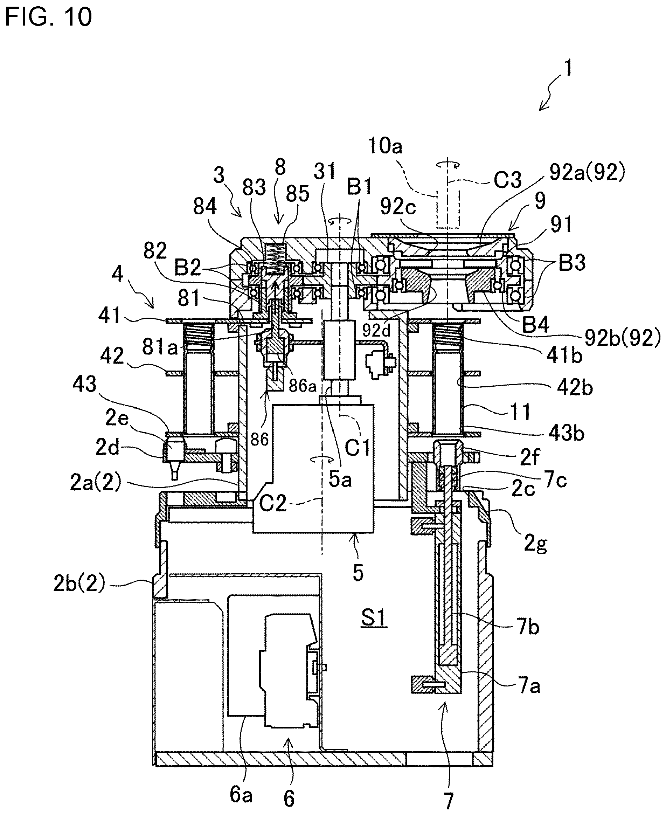

As shown in FIG. 10, the second rod 86a in the second cylinder 86 is then extended. The slide shaft 83 then slides upward against the urging force from the coil spring 85, causing the engagement tabs 83a to engage with the corresponding receiving tabs 84b on the third gear 84.

The drive motor 5 then rotates in the forward direction. The third gear 84 meshing with the first gear 31 then rotates in the reverse direction, and rotates integrally with the slide shaft 83, causing the second gear 81 to rotate in the reverse direction. This allows a reverse rotation of the rotary storage 4.

When another nozzle 11 for replacement next reaches the component supply area V1 by the reverse rotation of the rotary storage 4, the reverse rotation of the rotary storage 4 stops. The second rod 86a in the second cylinder 86 is then retracted. Under the urging force from the coil spring 85, the slide shaft 83 slides downward to disengage the engagement tabs 83a from the corresponding receiving tabs 84b.

The first cylinder 7a in the component transporter 7 is operated to extend the first rod 7b. As shown in FIG. 11, the first rod 7b pushes the nozzle 11 located in the component supply area V1 upward from below while passing through the support hole 43b and the second through-hole 42b. The nozzle 11 then reaches the component replacement area V2 while being guided through the first through-hole 41b and the second through-hole 42b. During this operation, the follower gear 91 rotates in the first direction (X1 direction) relative to the rotary disk 92.

After the torch body 10a is moved downward to come in contact with the nozzle 11, the drive motor 5 then rotates in the reverse direction to cause the follower gear 91 to rotate relative to the rotary disk 92 in the second direction (X2 direction). As shown in FIGs. 12 and 13, in cooperation with the follower gear 91 rotating relative to the rotary disk 92 in the second direction, the fitting portions 91a press the bases 93d in the second direction to cause the grips 93 to pivot in the second direction (Z2 direction). This causes the second hooks 93c to advance into the component replacement area V2 and grip the nozzle 11.

With the nozzle 11 gripped by the grips 93, the drive motor 5 rotates further in the reverse direction to cause the nozzle 11 to rotate in the second direction and be screwed to the torch body 10a.

The drive motor 5 then rotates in the forward direction to cause the follower gear 91 to rotate relative to the rotary disk 92 in the first direction. In cooperation with the follower gear 91 rotating relative to the rotary disk 92 in the first direction, the fitting portions 91a press the bases 93d in the first direction to cause the grips 93 to pivot in the first direction. This causes the second hooks 93c to retract from the component replacement area V2 and release the nozzle 11 from the grips 93.

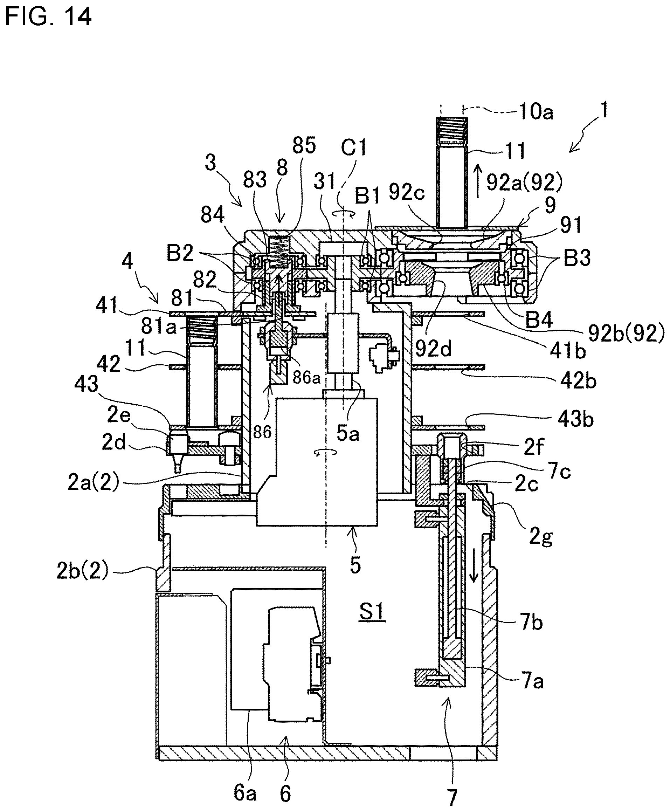

As shown in FIG. 14, the torch body 10a moves upward to cause the nozzle 11 screwed to the torch body 10a to retract from the component replacement area V2.

The second rod 86a in the second cylinder 86 is then extended. The slide shaft 83 slides upward against the urging force from the coil spring 85, causing the engagement tabs 83a to engage with the corresponding receiving tabs 84b on the third gear 84.

The drive motor 5 then rotates in the reverse direction. The third gear 84 meshing with the first gear 31 rotates in the forward direction, and rotates integrally with the slide shaft 83, causing the second gear 81 to rotate in the forward direction. This allows a forward rotation of the rotary storage 4.

When the first cutout 41a and second cutout 42a reach the component replacement area V2 by the forward rotation of the rotary storage 4, the forward rotation of the rotary storage 4 stops, and replacement of the nozzle 11 is complete.

In the above embodiments of the present invention, the nozzle 11 screwed to the torch body 10a in the component replacement area V2 for the rotary grip 9 is gripped by the rotary grip 9, and the drive motor 5 is driven to allow the reverse rotation of the rotary grip 9. The nozzle 11 is thus detached from the torch body 10a. In contrast, when the drive motor 5 is driven with the clutch assembly 8 operable to transmit rotation between the rotary storage 4 and the drive motor 5, the rotary storage 4 rotates to allow a nozzle 11 for replacement to move to the component supply area V1. In this state, the component transporter 7 transports the nozzle 11 from the component supply area V1 to the component replacement area V2. With the torch body 10a moved closer to the component replacement area V2, the nozzle 11 is gripped by the rotary grip 9 and the drive motor 5 is driven to allow the forward rotation of the rotary grip 9. The nozzle 11 is thus attached to the torch body 10a. Thus, the single drive motor 5 simply used to replace the nozzles 11 uses less space and thus allows the entire equipment to be more compact. In addition, the number of components can be reduced as compared with the structure described in Patent Literature 1, thus maintaining the cost of components to be low. The clutch assembly 8 is used to connect the drive motor 5 and the rotary grip 9 to avoid a large load to be applied when the drive motor 5 and the rotary grip 9 are connected, and thus to avoid deformation and damage to the rotary grip 9 and the drive motor 5 for replacing the nozzles 11.

In addition, the drive motor 5 and the clutch assembly 8 are located inward from the rotary storage 4, which is an unused space, thus allowing the entire rotary changer 1 to be more compact.

When the nozzles 11 are sequentially placed in the corresponding first through-holes 41b and second through-holes 42b corresponding vertically to one another in the rotary storage 4 from above, the nozzles 11 are supported by the support plate 43 and are positioned in the circumferential direction of the rotary storage 4 with the first through-holes 41b and the second through-holes 42b in which the nozzles 11 are placed. In this manner, the rotary storage 4 with the simple structure can store the nozzles 11 at predetermined positions, thus further reducing the cost of the rotary changer 1.

When the first cutout 41a and the second cutout 42a are moved to the component supply area V1 and the nozzle 11 detached from the torch body 10a is released from being gripped by the rotary grip 9, the nozzle 11 falling from the rotary grip 9 passes through the first cutout 41a and the second cutout 42a and is discharged out of the rotary changer 1. Thus, the nozzle 11 detached from the torch body 10a after being used can be efficiently discharged out of the rotary changer 1 without being retained in the rotary storage 4.

In the clutch assembly 8, when the second rod 86a in the second cylinder 86 is retracted, the slide shaft 83 remains sliding downward under the urging force from the coil spring 85, and the engagement tabs 83a are separated from the receiving tabs 84b, thus causing the drive motor 5 to rotate the rotary grip 9 alone in the forward or reverse direction. Thus, the nozzles 11 stored in the rotary storage 4 each can be positioned in the component supply area V1 and attached to the torch body 10a. In contrast, when the second rod 86a in the second cylinder 86 is extended against the urging force from the coil spring 85, the engagement tabs 83a engage with the corresponding receiving tabs 84b, thus causing the drive motor 5 to rotate the rotary grip 9 as well as the rotary storage 4 in the forward or reverse direction. The nozzles 11 stored in the rotary storage 4 are thus each moved to the component supply area V1. In this manner, the clutch assembly 8 with the simple structure allows switching of the rotary storage 4 between the rotatable state and the non-rotatable state.

The rotary changer 1 according to one or more embodiments of the present invention is used for replacing the nozzle 11 on the torch body 10a, but may also be used, for example, to replace a contact tip, which is a torch component attached to the torch body 10a, by the rotation about its central axis.

In one or more embodiments of the present invention, the coil spring 85 is used as an urging member that generates an urging force against the slide shaft 83 in the clutch assembly 8, but another urging member, such as a rubber member or a cylinder, may be used.

The rotary changer 1 according to one or more embodiments of the present invention is orientable to have the axis of rotation C1 of the drive motor 5, the axis of rotation C2 of the rotary storage 4, and the axis of rotation C3 of the rotary grip 9 extending vertically. However, the axes of rotation C1 to C3 may be tilted.

In one or more embodiments of the present invention, the nozzles 11 are positioned with two annular plates, or the first annular plate 41 and the second annular plate 42 in the rotary storage 4. However, three or more annular plates may be used to position the nozzles 11.

### INDUSTRIAL APPLICABILITY

The technique according to one or more embodiments of the present invention is applicable to, for example, a rotary changer for replacing torch components of a welding torch used for arc welding, such as a nozzle and a contact tip screwed to the distal end of the torch body.

### REFERENCE SIGNS LIST

- 1: rotary changer
- 4: rotary storage
- 5: drive motor
- 7: component transporter
- 7a: first cylinder
- 7b: first rod
- 8: clutch assembly
- 9: rotary grip
- 10: welding torch
- 10a: torch body
- 11: nozzle (torch component)
- 31: first gear
- 41: first annular plate
- 41a: first cutout
- 41b: first through-hole
- 42: second annular plate
- 42a: second cutout
- 42b: second through-hole
- 43: support plate
- 81: second gear
- 83: slide shaft
- 83a: engagement tab
- 84: third gear
- 84b: receiving tab
- 85: coil spring (urging member)
- 86: second cylinder
- 86a: second rod
- C1 to C3: axis of rotation
- V1: component supply area
- V2: component replacement area

## Claims

1. A rotary changer (1) for attaching a plurality of torch components each to a torch body of a welding torch in a forward rotation or detaching each of the plurality of torch components from the torch body in a reverse rotation, the rotary changer comprising:
a rotary grip (9) configured to grip each of the plurality of torch components in a component replacement area in the forward rotation or in the reverse rotation about a central axis of the torch component;
a rotary storage (4) configured to store the plurality of torch components at predetermined intervals in a circumferential direction about an axis of rotation and move each of the plurality of torch components sequentially to a component supply area (V1) by rotating about the axis of rotation;
a component transporter (7) configured to transport each of the plurality of torch components from the component supply area (V1) to the component replacement area (V2);
a drive motor (5) configured to drive the rotary grip (9) in the forward rotation or in the reverse rotation; **characterized by**
a clutch assembly (8) configured to transmit rotation and block transmission of rotation between the rotary storage (4) and the drive motor (5).

2. The rotary changer according to claim 1, wherein
the rotary storage is annular about the axis of rotation, and the drive motor and the clutch assembly are located inward from the rotary storage.

3. The rotary changer according to claim 2, wherein
the rotary storage is orientable to have the axis of rotation extending vertically, and the rotary storage includes a support plate configured to support the plurality of torch components and includes a plurality of annular plates located above the support plate and aligned along the axis of rotation,
each of the plurality of annular plates has a plurality of through-holes corresponding to outer shapes of the plurality of torch components at predetermined intervals in the circumferential direction about the axis of rotation, and
the plurality of through-holes in each of the plurality of annular plates are at positions corresponding vertically to the plurality of through-holes in an adjacent annular plate of the plurality of annular plates.

4. The rotary changer according to claim 3, wherein
each of the plurality of annular plates has a cutout being open on an outer side to allow each of the plurality of torch components to pass through, and
the cutout is at a position corresponding vertically to the cutout in the adjacent annular plate and is movable to the component supply area by rotation of the rotary storage.

5. The rotary changer according to any one of claims 1 to 4, wherein
the component transporter includes a first cylinder including a first rod extendable and retractable between the component supply area and the component replacement area, and the first rod extends to press and move each of the plurality of torch components from the component supply area to the component replacement area.

6. The rotary changer according to any one of claims 1 to 5, wherein
a first gear is attached to the drive motor in an integrally rotatable manner,
the clutch assembly includes a second gear configured to rotate the rotary storage, a slide shaft attached to the second gear in an integrally rotatable manner and slidable along a centerline of the second gear, a third gear meshing with the first gear, an urging member urging the slide shaft in a first direction, and a second cylinder including a second rod extendable to slide the slide shaft in a second direction against an urging force from the urging member,
the slide shaft includes an engagement tab, and
the third gear includes a receiving tab engageable with the engagement tab when the slide shaft slides in the second direction.

## Patentansprüche

1. Drehwechsler (1) zum Anbringen einer Vielzahl von Brennerkomponenten jeweils an einem Brennerkörper eines Schweißbrenners in einer Vorwärtsdrehung oder zum Lösen jeder der Vielzahl von Brennerkomponenten vom Brennerkörper in einer Rückwärtsdrehung, wobei der Drehwechsler aufweist:
einen Drehgreifer (9), der so konfiguriert ist, dass er jede der Vielzahl von Brennerkomponenten in einem Komponentenaustauschbereich in der Vorwärtsdrehung oder in der Rückwärtsdrehung um eine Mittelachse der Brennerkomponente greift;
einen Drehspeicher (4), der so konfiguriert ist, dass er die Vielzahl von Brennerkomponenten in vorbestimmten Abständen in einer Umfangsrichtung um eine Drehachse lagert und jede der Vielzahl von Brennerkomponenten durch Drehen um die Drehachse nacheinander zu einem Komponentenzuführbereich (V1) bewegt;
einen Komponententransporter (7), der so konfiguriert ist, dass er jede der Vielzahl von Brennerkomponenten aus dem Komponentenzuführbereich (V1) in den Komponentenaustauschbereich (V2) transportiert;
einen Antriebsmotor (5), der so konfiguriert ist, dass er den Drehgreifer (9) in Vorwärtsdrehung oder in Rückwärtsdrehung antreibt; **gekennzeichnet durch**
eine Kupplungsbaugruppe (8), die so konfiguriert ist, dass sie die Drehung überträgt und die Drehübertragung zwischen dem Drehspeicher (4) und dem Antriebsmotor (5) blockiert.

2. Drehwechsler gemäß Anspruch 1, wobei
der Drehspeicher ringförmig um die Drehachse vorliegt und der Antriebsmotor und die Kupplungsbaugruppe innen von dem Drehspeicher angeordnet sind.

3. Drehwechsler nach Anspruch 2, wobei
der Drehspeicher so ausgerichtet werden kann, dass sich die Drehachse vertikal erstreckt, und der Drehspeicher eine Trägerplatte aufweist, die so konfiguriert ist, dass sie die Vielzahl von Brennerkomponenten trägt, und eine Vielzahl von ringförmigen Platten aufweist, die über der Trägerplatte angeordnet und entlang der Drehachse ausgerichtet sind,
jede der Vielzahl von ringförmigen Platten eine Vielzahl von Durchgangslöchern aufweist, die den Außenformen der Vielzahl von Brennerkomponenten in vorbestimmten Abständen in Umfangsrichtung um die Drehachse entsprechen, und
die Vielzahl von Durchgangslöchern in jeder der Vielzahl von ringförmigen Platten an Positionen vertikal der Vielzahl von Durchgangslöchern in einer benachbarten ringförmigen Platte der Vielzahl von ringförmigen Platten entsprechen.

4. Drehwechsler nach Anspruch 3, wobei
jede der Vielzahl von ringförmigen Platten einen Ausschnitt aufweist, der an einer Außenseite offen ist, um jede der Vielzahl von Brennerkomponenten hindurchzulassen, und
der Ausschnitt an einer Position vertikal entsprechend dem Ausschnitt in der benachbarten ringförmigen Platte angeordnet und durch Drehung des Drehspeichers in den Komponentenzuführbereich bewegbar ist.

5. Drehwechsler nach einem der Ansprüche 1 bis 4, wobei
der Komponententransporter einen ersten Zylinder aufweist, der eine erste Stange enthält, die zwischen dem Komponentenzuführbereich und dem Komponentenaustauschbereich ausfahrbar und einziehbar ist, und die erste Stange sich erstreckt, um jede der Vielzahl von Brennerkomponenten von dem Komponentenzuführbereich in den Komponentenaustauschbereich zu drücken und zu bewegen.

6. Drehwechsler nach einem der Ansprüche 1 bis 5, wobei
ein erstes Zahnrad integral drehbar an dem Antriebsmotor befestigt ist,
die Kupplungsbaugruppe ein zweites Zahnrad, das zum Drehen des Drehspeichers konfiguriert ist, eine Schiebewelle, die integral drehbar an dem zweiten Zahnrad befestigt ist und entlang einer Mittellinie des zweiten Zahnrads verschiebbar ist, ein drittes Zahnrad, das mit dem ersten Zahnrad kämmt, ein Druckelement, das die Schiebewelle in einer ersten Richtung drückt, und einen zweiten Zylinder, der eine zweite Stange enthält, die sich erstrecken kann, um die Schiebewelle in einer zweiten Richtung gegen eine Druckkraft von dem Druckelement zu verschieben,
wobei die Schiebewelle eine Eingriffslasche aufweist, und
das dritte Zahnrad eine Aufnahme-Lasche aufweist, die mit der Eingriffslasche in Eingriff bringbar ist, wenn die Schiebewelle in der zweiten Richtung gleitet.

## Revendications

1. Changeur rotatif (1) pour fixer une pluralité de composants de chalumeau, chacun à un corps de chalumeau d'un chalumeau de soudage dans une rotation avant ou détacher chacun de la pluralité de composants de chalumeau du corps de chalumeau dans une rotation arrière, le changeur rotatif comprenant :
une poignée rotative (9) configurée pour saisir chacun de la pluralité de composants de chalumeau dans une zone de remplacement de composants dans la rotation avant ou dans la rotation arrière autour d'un axe central du composant de chalumeau ;
un stockage rotatif (4) configuré pour stocker la pluralité de composants de chalumeau à des intervalles prédéterminés dans une direction circonférentielle autour d'un axe de rotation et déplacer chacun de la pluralité de composants de chalumeau séquentiellement vers une zone d'alimentation en composants (V1) en tournant autour de l'axe de rotation ;
un transporteur de composants (7) configuré pour transporter chacun de la pluralité de composants de chalumeau de la zone d'alimentation en composants (VI) à la zone de remplacement de composants (V2) ; un moteur d'entraînement (5) étant configuré pour entraîner la poignée rotative (9) dans la rotation avant ou dans la rotation arrière ; **caractérisé par** un ensemble d'embrayage (8) configuré pour transmettre une rotation et bloquer la transmission de rotation entre le stockage rotatif (4) et le moteur d'entraînement (5).

2. Changeur rotatif selon la revendication 1, dans lequel
le stockage rotatif est annulaire autour de l'axe de rotation et le moteur d'entraînement et l'ensemble d'embrayage sont situés vers l'intérieur du stockage rotatif.

3. Changeur rotatif selon la revendication 2, dans lequel
le stockage rotatif est orientable pour présenter l'axe de rotation s'étendant verticalement et le stockage rotatif inclut une plaque de support configurée pour soutenir la pluralité de composants de chalumeau et inclut une pluralité de plaques annulaires situées au-dessus de la plaque de support et alignées le long de l'axe de rotation,
chacune parmi la pluralité de plaques annulaires présente une pluralité de trous traversants correspondant à des formes extérieures de la pluralité de composants de chalumeau à des intervalles prédéterminés dans la direction circonférentielle autour de l'axe de rotation, et
la pluralité de trous traversants dans chacune de la pluralité de plaques annulaires sont à des positions correspondant verticalement à la pluralité de trous traversants dans une plaque annulaire adjacente de la pluralité de plaques annulaires.

4. Changeur rotatif selon la revendication 3, dans lequel
chacune parmi la pluralité de plaques annulaires présente une découpe étant ouverte sur un côté extérieur pour permettre à chacun de la pluralité de composants de chalumeau de passer à travers, et
la découpe est à une position correspondant verticalement à la découpe dans la plaque annulaire adjacente et est mobile vers la zone d'alimentation en composants par rotation du stockage rotatif.

5. Changeur rotatif selon l'une quelconque des revendications 1 à 4, dans lequel
le transporteur de composants inclut un premier cylindre incluant une première tige extensible et
rétractable entre la zone d'alimentation en composants et la zone de remplacement de composants, et la première tige s'étend pour presser et déplacer chacun de la pluralité de composants de chalumeau de la zone d'alimentation en composants à la zone de remplacement de composants.

6. Changeur rotatif selon l'une quelconque des revendications 1 à 5, dans lequel
un premier engrenage est fixé au moteur d'entraînement de manière rotative d'un seul tenant,
l'ensemble d'embrayage inclut un deuxième engrenage configuré pour faire tourner le stockage rotatif, un arbre coulissant fixé au deuxième engrenage de manière rotative d'un seul tenant et pouvant coulisser le long d'une ligne centrale du deuxième engrenage, un troisième engrenage s'engrenant avec le premier engrenage, un élément de poussée poussant l'arbre coulissant dans une première direction, et un second cylindre incluant une seconde tige extensible pour faire coulisser l'arbre coulissant dans une seconde direction contre une force de poussée de l'élément de poussée,
l'arbre coulissant inclut une languette de mise en prise, et
le troisième engrenage inclut une languette de réception pouvant entrer en prise avec la languette de mise en prise lorsque l'arbre coulissant coulisse dans la seconde direction.
